# EUROPEAN PATENT SPECIFICATION

(11) **EP 3 332 117 B1**
(45) Date of publication and mention of the grant of the patent: **13.01.2021**
(21) Application number: 16774997.7
(22) Date of filing: 29.07.2016
(51) Int. Cl.: F03D 5/00, F03D 5/02

(54) **POWER TRANSMITTING SYSTEM THROUGH ROPES**
KRAFTÜBERTRAGUNGSSYSTEM DURCH SEILE
SYSTÈME DE TRANSMISSION DE PUISSANCE PAR CORDES

(30) Priority: 03.08.2015 IT UB20152819
(43) Date of publication of application: 13.06.2018
(73) Proprietor: Sequoia IT S.R.L., 10024 Moncalieri (IT)
(72) Inventor: VERGNANO, Giovanni, 10024 Moncalieri (TO) (IT)
(74) Representative: Garavelli, Paolo
(86) International application number: PCT/IT2016/000189
(87) International publication number: WO 2017/021991

(56) References cited:
- US-A- 4 166 596
- US-A- 4 470 563
- US-A1- 2011 103 954

## Description

The present invention refers to a power transmitting system through ropes, in particular for power generating applications of a wind type and for controlling nautical winches.

The generation of energy at a height, where strong and constant winds blow, has always met difficulties related to the weight of the system designed for such purpose.

One of the most complete studies on this subject has been performed by Company Skywindpower, for which a prototype has been built, which can operate only with a strong wind intensity: actually, it can transform into energy only a reduced percentage of wind which bumps against it, using the remaining parte as support of its structure at a height.

The main components of a generating system of the wind type through rotation are rotor and generator, this latter one being generally placed near the rotor and connected to an electric cable for transmitting energy generated on the ground. As regards the generator, so far its placement has been devised at an upper level due to the difficulty of mechanically transferring the energy generated on the ground. The weight of the generator and of the electric cable therefore has remained the major obstacle to the development of wind generation at a height.

Document US-A-4166596 discloses a power transmitting system according to the preamble of Claim 1. Document US-A-4470563 discloses a pulley arrangement for transmitting power from a rotor held in the air by a balloon to a ground based generator.

Object of the present invention is solving the above prior art problems, by providing a power transmitting system which allows having the generator placed on the ground, thereby allowing to develop an efficient wind generator at an upper level.

The present invention is an innovation with respect to typical traditional transmissions of the pulley type, where size and mass of the pulleys and of the belts depend on the wear to be obtained, which must be greater than the force to be transmitted.

The above and other objects and advantages of the invention, as will appear from the following description, are obtained with a power transmitting system as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figure 1 shows a perspective view of a preferred embodiment of the power transmitting system according to the present invention useful for a generating apparatus of the wind type;
- Figure 2 shows a schematic perspective view of a generating application of the wind type which uses the power transmitting system of Figure 1; and

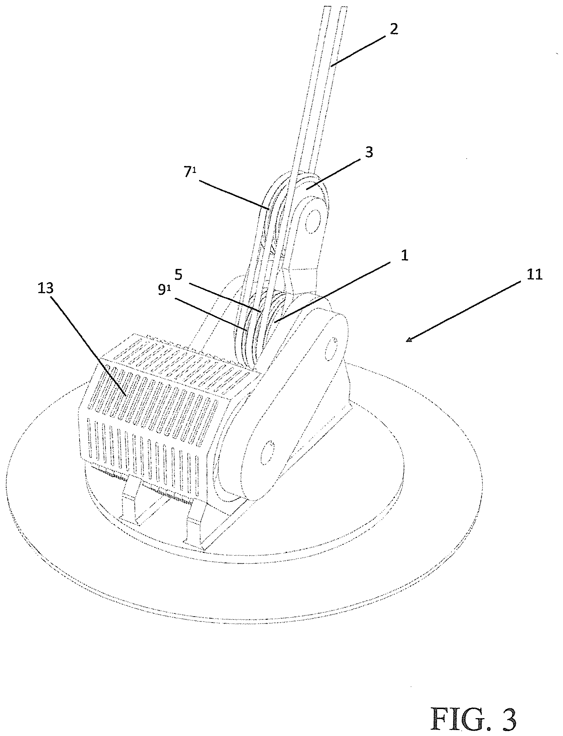

- Figure 3 shows a detailed perspective view of the power transmitting system applied to a generator of the application of Figure 2.

As mentioned above, the present invention uses a variation of typical transmission of the pulley type, where size and contact surface of the pulleys and of the belts depend on the wear to be obtained, which must be greater than the forces to be transmitted. Big winches used on sailing boats, coupled with fibre ropes with an optimum weight/resistance ratio, are a good example of a discontinuous energy transmission, where the necessary friction is obtained with many windings of a rope on the cylinder drum.

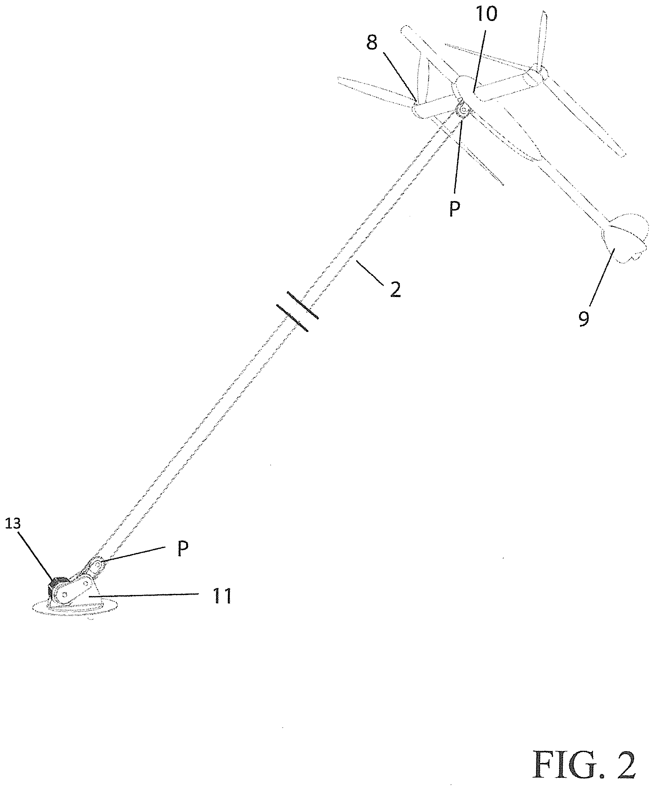

The passage from a discontinuous to a continuous transmission requires, in order to prevent a quick wear, the passage of the rope on many pulleys which are mutually mechanically interconnected so that the sum of the circular sectors of the pulleys involved in the passage of the rope is enough to determine a wear which is greater than the energy to be transmitted, using a rope with high resistance with a pre-established length, closed as a ring (like the application shown in Figure 2).

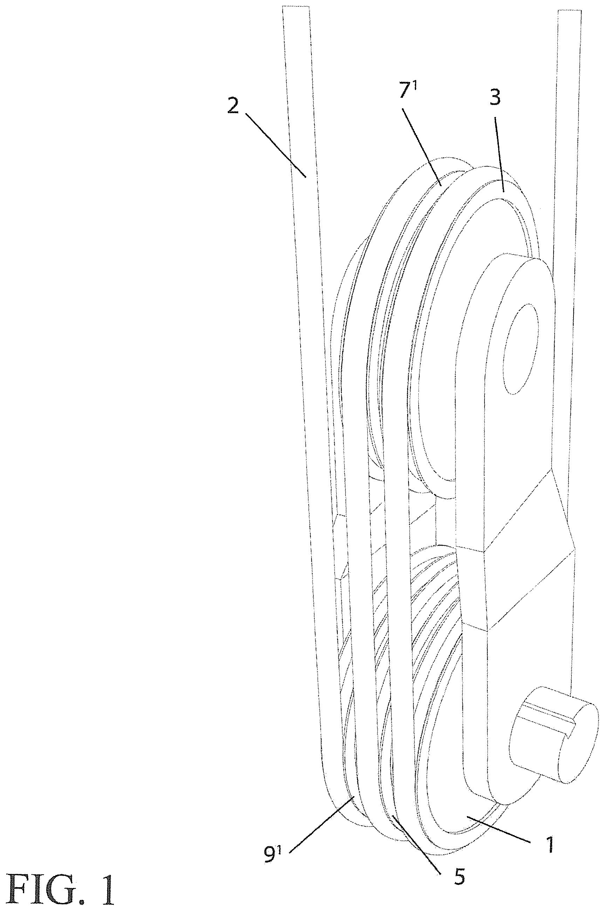

The principle of power transmission is similar to the one of a bicycle chain, with a traction rope 2 and a recovery rope 2, which can be called "sleeping" rope 2 (Figure 2). The number of mutually mechanically interconnected pulleys in Figure 1 are shown with references 1, 5, 9', but the number of connected pulleys changes according to the performances to be obtained.

As regards the application of the power transmitting system P of the present invention to a power generating application of a wind type with rotation, with reference to Figure 2, a rotor 6 is shown, characterized by a reduced weight (in order to allow its use in wind applications at a height).

The transmitting system P described in its wind application operates differently from a bicycle for example, since, in case of a bicycle, the transmission of energy occurs between two fixed points, while in case of a wind generating system at a height, there is a moving point at an upper level, and therefore there is the need of having, in such moving point, a traction force along an opposite direction and with a force which is greater than the force to be transmitted.

The transmission system will be equipped with a clutch which will actuate the pulleys only after a complete development of the ring-type transmission rope.

When there is wind, the aerodynamic shape of the wind generator (and its possible integration with lifting wing profiles or kites which increase lifting and use of auxiliary supporting means, which are lighter than air) can guarantee the prevalence of the traction force on the force to be transmitted.

The rotation of the blades 8 of the generator 9 of the wind type actuates the assembly of pulleys 10 which exert a traction on the rope 2. On the ground, the generator unit 11 contains a generator 13 with variable energy absorption, which is rotated by the traction of the rope 2 through its own power transmitting system P at least with the interconnected pulleys 1, 5, 9' which generate a balanced system in which the generator 9 of the wind type will keep its position stable at an upper level.

A sensor 15 adapted to detect the tension of the rope 2 allows regulating the energy absorption by the generator 13. The rotation block of the ground system will produce a recovery of the generator 9 of a wind type through self-traction on the traction rope 2. Without wind, the recovery of the generator 9 of the wind type will be possible by shortening the sleeping rope 2 obtained with a suitable rotor (not shown). The recovery will occur according to the same principle of an helicopter placed in self-traction.

The proposed system P can be equipped with one or more mechanically interconnected rotors 6.

The present invention avoids the need of intervening on the ropes 2, since they can be used in all required functions without modifying their path in the pulleys 1, 3, 5, 7' 9'. In fact, by using the system P of the invention as winch, the system P itself allows operating through a traction of the rope 2, keeping the traction or simply transforming the traction pulleys 1, 3, 5, 7', 9' into more or less braked wheels with a free rotation, in order to more or less quickly free the rope 2 itself.

The complete removal of every danger will be obtained through the use of a system for collecting the free rope 2 through coils 16, 18 or another technology, which avoids the risk of dangers for things or people. The same technology is valid for an automatic mechanical drive, nowadays made with more complex and costly winches of the drum type.

Summarizing, the above described invention is related to a power transmitting system P comprising at least one first pulley 1, 5, 9' (having a first diameter) adapted to operatively cooperate with at least one second pulley 3, 7' (having a second diameter lower than the first diameter), and a rope 2 adapted to pass in succession around a circumference of the first pulley 1, 5, 9', then around the circumference of the second pulley 3, 7' in order to follow a path adapted to provide an extended friction surface for the rope 2.

Obviously, the first pulleys 1, 5, 9' and the second pulleys 3, 7' could be more than one: in Figure 1, three first pulleys 1, 5, 9' and two second pulleys 3, 7' are for example shown, so that the rope 2 is wrapped around a first pulley 1, then around a second pulley 3, then around another first pulley 5, then around another second pulley 7' and finally around another first pulley 9' in order to follow a path adapted to provide an extended friction surface for the rope 2.

An arrangement of this type avoids that the fibres of the rope 2 are subjected to a double torsion, which is deemed very negative.

In Figure 1, the bigger pulleys 1, 5, 9' are mutually integral, while the pulleys 3, 7' with a smaller diameter are free; this configuration is obviously preferred, but not limiting, other variations being possible in which the diameters of the pulleys are inverted, or all pulleys have the same diameter.

Should the pulleys 1, 3, 5, 7', 9' placed on the two axes be interconnected, either a same diameter or a reduction ratio with gears would be necessary.

It must be observed that the axes of the pulleys 1, 3, 5, 7', 9' are not mutually parallel, but have an angle which allows the alignment of the outlet ropes 2 with the throat of the following pulley to avoid rubbing and wear.

In the solution shown in Figure 2, a first power transmitting system P is operatively connected a a generator 13 placed on the ground and adapted to generate energy coming from a wind generator 9 placed at an upper level and operatively connected to a second power transmitting system P, the first and the second power transmitting systems P being also mutually operatively connected through the same rope 2.

Returning to Figure 2, the power generating arrangement of the wind type comprises:
- at least one wind generator 9 placed at an upper level equipped with rotary blades 8 and operatively connected to a power transmitting system P of the invention;
- at least one power generating unit 11 placed on the ground and comprising a generator 13 and a power transmitting system P of the invention; and
- a rope 2 adapted to operatively connect the wind generator 9 and the power generating unit 11.

The above power generating arrangement of the wind type can further comprise at least one sensor 15 for detecting a tension on the rope 2 and adapted to regulate the absorption of energy by the generator 13.

With such arrangement and the related increase of wear surfaces, the power transmission is enabled between an aerodynamic system for collecting the wind energy placed at an upper level and a system for transforming energy placed on the ground.

The transmission will be operative only when the rope 2 will be completely stretched and the system can operate as a tensioned transmission belt.

## Claims

1. Power transmitting system (P), **characterized in that** it comprises at least three first pulleys (1, 5, 9') having a first diameter, having a first rotation axis mutually identical and adapted to operatively cooperate with at least two second pulleys (3, 7'), having a second diameter and having a second rotation axis mutually identical and different from the first rotation axis, the first diameter being greater than the second diameter, and a rope (2) adapted to pass in succession around a circumference of one of the first pulleys (1, 5, 9'), then around a circumference of one of the second pulleys (3, 7'), then around a circumference of another of the first pulleys (1, 5, 9'), then around a circumference of another of the second pulleys (3, 7'), and then around a circumference of another of the first pulleys (1, 5, 9') in order to follow a path adapted to provide an extended friction surface for the rope (2), the axes of the pulleys (1, 3, 5, 7', 9') laying on a same plane and not being mutually parallel, but having an angle which allows the alignment of the outlet ropes (2) with the throat of the following pulley to avoid rubbing and wear, so that said power transmitting system (P) is operatively connected to a generator (13) placed on the ground and adapted to generate energy coming from a wind generator (9) placed at an upper level and operatively connected to another power transmitting system (P), the two power transmitting systems (P) being further mutually operatively connected through the same rope (2).

2. Power transmitting system (P) according to claim 1, **characterized in that** the pulleys (1, 5, 9') having a greater diameter are mutually integral, while the pulleys (3, 7') having a smaller diameter are freely rotating.

3. Power transmitting system (P), **characterized in that** it comprises at least three first pulleys having a first diameter, having a first rotation axis mutually identical and adapted to operatively cooperate with at least two second pulleys, having a second diameter and having a second rotation axis mutually identical and different from the first rotation axis, the first diameter being smaller than the second diameter, and a rope (2) adapted to pass in succession around a circumference of one of the first pulleys, then around a circumference of one of the second pulleys, then around a circumference of another of the first pulleys, then around a circumference of another of the second pulleys, and then around a circumference of another of the first pulleys in order to follow a path adapted to provide an extended friction surface for the rope (2), the axes of the pulleys laying on a same plane and not being mutually parallel, but having an angle which allows an alignment of the outlet ropes (2) with the throat of the following pulley to avoid rubbing and wear, so that said power transmitting system (P) is operatively connected to a generator (13) placed on the ground and adapted to generate energy coming from a wind generator (9) placed at an upper level and operatively connected to another power transmitting system (P), the two power transmitting systems (P) being further mutually operatively connected through the same rope (2).

4. Power transmitting system (P) according to claim 3, **characterized in that** the pulleys having a smaller diameter are mutually integral, while the pulleys having a greater diameter are freely rotating.

5. Power transmitting system (P), **characterized in that** it comprises at least three first pulleys having a first diameter, having a first rotation axis mutually identical and adapted to operatively cooperate with at least two second pulleys, having a second diameter and having a second rotation axis mutually identical and different from the first rotation axis, the first diameter being equal to the second diameter, and a rope (2) adapted to pass in succession around a circumference of one of the first pulleys, then around a circumference of one of the second pulleys, then around a circumference of another of the first pulleys, then around a circumference of another of the second pulleys, and then around a circumference of another of the first pulleys in order to follow a path adapted to provide an extended friction surface for the rope (2), the axes of the pulleys laying on a same plane and not being mutually parallel, but having an angle which allows an alignment of the outlet ropes (2) with the throat of the following pulley to avoid rubbing and wear, so that said power transmitting system (P) is operatively connected to a generator (13) placed on the ground and adapted to generate energy coming from a wind generator (9) placed at an upper level and operatively connected to another power transmitting system (P), the two power transmitting systems (P) being further mutually operatively connected through the same rope (2).

6. Power transmitting system (P) according to claim 5, **characterized in that** the pulleys having the first diameter are mutually integral, while the pulleys having the second diameter are freely rotating.

7. Power transmitting system (P) according to any one of the previous claims, **characterized in that** it is adapted to be operatively coupled with at least one first coil (16, 18) passing the rope (2) which goes out of one of the second pulleys (3, 7') through the first coil (16, 18).

8. Power transmitting system (P) according to claim 7, **characterized in that** it is adapted to be operatively coupled also with at least one second coil (16, 18) passing the rope (2) which goes out of one of the second pulleys (3, 7') around the first coil (16, 18) and passing the rope (2) which goes out of another of the second pulleys (3, 7') around the second coil (16, 18).

9. Power generating device of a wind type comprising:
- at least one wind generator (9) placed at an upper level equipped with rotary blades (8) operatively connected to a power transmitting system (P) according to any one of the previous claims;
- at least one power generating unit (11) placed on the ground and comprising a generator (13) and a power transmitting system (P) according to any one of the previous claims; and
- a rope (2) adapted to operatively connect the wind generator (9) and the power generating unit (11).

10. Power generating device of a wind type according to claim 9, **characterized in that** it further comprises at least one sensor (15) for detecting a tension on the rope (2) and adapted to regulate an absorption of energy by the generator (13) .

## Patentansprüche

1. Kraftübertragungssystem (P), das **dadurch gekennzeichnet ist, dass** es mindestens drei erste Riemenscheiben (1, 5, 9') enthält, die einen ersten Durchmesser haben, die eine erste gleiche Drehachse miteinander haben und die dazu dienen, für den Betrieb mit mindestens zwei zweiten Riemenscheiben (3, 7') zusammenzuarbeiten, die einen zweiten Durchmesser haben und die eine zweite gleiche Drehachse miteinander haben, die anders als die erste Drehachse ist, der erste Durchmesser ist größer als der zweite Durchmesser, und ein Kabel (2) dient dazu, nacheinander um einen Kreisumfang einer der ersten Riemenscheiben (1, 5, 9') zu laufen, dann um einen Kreisumfang einer der zweiten Riemenscheiben (3, 7'), dann um einen Kreisumfang einer anderen der ersten Riemenscheiben (1, 5, 9'), dann um einen Kreisumfang einer der zweiten Riemenscheiben (3, 7'), und dann um einen Kreisumfang einer anderen der ersten Riemenscheiben (1, 5, 9'), um einem Weg zu folgen, der dazu dient, eine weite Reibungsfläche für das Kabel (2) zu bieten, die Achsen der Riemenscheiben (1, 3, 5, 7', 9') liegen auf derselben Fläche und sind nicht parallel zueinander, aber sie haben einen Winkel, der die Ausrichtung der Kabel (2) am Ausgang des Hohlraums der folgenden Riemenscheibe ermöglicht, um Reibungen und Verschleiß zu vermeiden, daher ist das genannte Kraftübertragungssystem (P) für den Betrieb mit einem Generator (13) verbunden, der am Boden angebracht ist und dazu dient, Energie zu erzeugen, die aus einem Windgenerator (9) kommt, der auf einem höheren Niveau angebracht und für den Betrieb mit einem anderen Kraftübertragungssystem (P) verbunden ist, die zwei Kraftübertragungssysteme (P) sind außerdem für den Betrieb miteinander durch dasselbe Kabel (2) verbunden.

2. Kraftübertragungssystem (P) gemäß Patentanspruch 1, das **dadurch gekennzeichnet ist, dass** die Riemenscheiben (1, 5, 9') mit einem größeren Durchmesser einteilig miteinander sind, während die Riemenscheiben (3, 7') mit einem kleineren Durchmesser freidrehend sind.

3. Kraftübertragungssystem (P), das **dadurch gekennzeichnet ist, dass** es mindestens drei erste Riemenscheiben enthält, die einen ersten Durchmesser haben, die eine erste gleiche Drehachse miteinander haben und die dazu dienen, für den Betrieb mit mindestens zwei zweiten Riemenscheiben zusammenzuarbeiten, die einen zweiten Durchmesser haben und die eine zweite gleiche Drehachse miteinander haben, die anders als die erste Drehachse ist, der erste Durchmesser ist kleiner als der zweite Durchmesser, und ein Kabel (2) dient dazu, nacheinander um einen Kreisumfang einer der ersten Riemenscheiben zu laufen, dann um einen Kreisumfang einer der zweiten Riemenscheiben, dann um einen Kreisumfang einer anderen der ersten Riemenscheiben, dann um einen Kreisumfang einer der zweiten Riemenscheiben, und dann um einen Kreisumfang einer anderen der ersten Riemenscheiben, um einem Weg zu folgen, der dazu dient, eine weite Reibungsfläche für das Kabel (2) zu bieten, die Achsen der Riemenscheiben liegen auf derselben Fläche und sind nicht parallel zueinander, aber sie haben einen Winkel, der die Ausrichtung der Kabel (2) am Ausgang des Hohlraums der folgenden Riemenscheibe ermöglicht, um Reibungen und Verschleiß zu vermeiden, daher ist das genannte Kraftübertragungssystem (P) für den Betrieb mit einem Generator (13) verbunden, der am Boden angebracht ist und dazu dient, Energie zu erzeugen, die aus einem Windgenerator (9) kommt, der auf einem höheren Niveau angebracht und für den Betrieb mit einem anderen Kraftübertragungssystem (P) verbunden ist, die zwei Kraftübertragungssysteme (P) sind außerdem für den Betrieb miteinander durch dasselbe Kabel (2) verbunden.

4. Kraftübertragungssystem (P) gemäß Patentanspruch 1, das **dadurch gekennzeichnet ist, dass** die Riemenscheiben mit einem kleineren Durchmesser einteilig miteinander sind, während die Riemenscheiben mit einem größeren Durchmesser freidrehend sind.

5. Kraftübertragungssystem (P), das **dadurch gekennzeichnet ist, dass** es mindestens drei erste Riemenscheiben enthält, die einen ersten Durchmesser haben, die eine erste gleiche Drehachse miteinander haben und die dazu dienen, für den Betrieb mit mindestens zwei zweiten Riemenscheiben zusammenzuarbeiten, die einen zweiten Durchmesser haben und die eine zweite gleiche Drehachse miteinander haben, die anders als die erste Drehachse ist, der erste Durchmesser entspricht dem zweiten Durchmesser, und ein Kabel (2) dient dazu, nacheinander um einen Kreisumfang einer der ersten Riemenscheiben zu laufen, dann um einen Kreisumfang einer der zweiten Riemenscheiben, dann um einen Kreisumfang einer anderen der ersten Riemenscheiben, dann um einen Kreisumfang einer der zweiten Riemenscheiben, und dann um einen Kreisumfang einer anderen der ersten Riemenscheiben, um einem Weg zu folgen, der dazu dient, eine weite Reibungsfläche für das Kabel (2) zu bieten, die Achsen der Riemenscheiben liegen auf derselben Fläche und sind nicht parallel zueinander, aber sie haben einen Winkel, der die Ausrichtung der Kabel (2) am Ausgang des Hohlraums der folgenden Riemenscheibe ermöglicht, um Reibungen und Verschleiß zu vermeiden, daher ist das genannte Kraftübertragungssystem (P) für den Betrieb mit einem Generator (13) verbunden, der am Boden angebracht ist und dazu dient, Energie zu erzeugen, die aus einem Windgenerator (9) kommt, der auf einem höheren Niveau angebracht und für den Betrieb mit einem anderen Kraftübertragungssystem (P) verbunden ist, die zwei Kraftübertragungssysteme (P) sind außerdem für den Betrieb miteinander durch dasselbe Kabel (2) verbunden.

6. Kraftübertragungssystem (P) gemäß Patentanspruch 5, das **dadurch gekennzeichnet ist, dass** die Riemenscheiben mit dem ersten Durchmesser einteilig miteinander sind, während die Riemenscheiben mit dem zweiten Durchmesser freidrehend sind.

7. Kraftübertragungssystem (P) gemäß einem beliebigen der vorhergehenden Patentansprüche, das **dadurch gekennzeichnet ist, dass** es dazu dient, beim Betrieb mit mindestens einer ersten Spule (16, 18) verbunden zu werden, indem das Kabel (2), das aus einer der zweiten Riemenscheiben (3, 7') kommt, durch die erste Spule (16, 18) geführt wird.

8. Kraftübertragungssystem (P) gemäß Patentanspruch 7, das **dadurch gekennzeichnet ist, dass** es dazu dient, beim Betrieb auch mit mindestens einer zweiten Spule (16, 18) verbunden zu werden, indem das Kabel (2) das aus einer der zweiten Riemenscheiben (3, 7') kommt, um die erste Spule (16, 18) geführt wird, und das Kabel (2), das aus einer der zweiten Riemenscheiben (3, 7') kommt, um die zweite Spule (16, 18) geführt wird.

9. Windkraftanlage mit:
- mindestens einem Windgenerator (9), der auf einem höheren Niveau angebracht und mit Drehflügeln (8) ausgestattet ist, und beim Betrieb mit einem Kraftübertragungssystem (P) gemäß einem beliebigen der vorhergehenden Patentansprüche verbunden wird;
- mindestens einer Krafterzeugungseinheit (11), die am Boden angebracht ist und einen Generator (13) und ein Kraftübertragungssystem (P) gemäß einem beliebigen der vorhergehenden Patentansprüche enthält; und
- einem Kabel (2), das dazu dient, beim Betrieb den Windgenerator (9) und die Krafterzeugungseinheit (11) zu verbinden.

10. Windkraftanlage gemäß Patentanspruch 9, die **dadurch gekennzeichnet ist, dass** sie außerdem mindestens einen Sensor (15) enthält, um die Spannung am Kabel (2) zu erfassen und dazu dient, die Energieaufnahme durch den Generator (13) zu regeln.

## Revendications

1. Système de transmission de puissance (P) **caractérisé en ce qu'**il comprend au moins trois premières poulies (1, 5, 9') ayant un premier diamètre, ayant un premier axe de rotation identique entre eux et aptes à coopérer opérationnellement avec au moins deux secondes poulies (3, 7'), ayant un second diamètre et ayant un second axe de rotation identique entre eux et différent du premier axe de rotation ; le premier diamètre est plus grand que le second diamètre; et un câble (2) apte à passer d'abord autour d'une circonférence d'une des premières poulies (1, 5, 9'), puis autour d'une circonférence d'une des secondes poulies (3, 7'), ensuite autour d'une circonférence d'une autre des premières poulies (1, 5, 9'), puis autour d'une circonférence d'une autre des secondes poulies (3, 7'), et enfin autour d'une circonférence d'une autre des premières poulies (1, 5, 9') dans le but de suivre un parcours apte à fournir une surface de frottement étendue pour le câble (2) ; les axes des poulies (1, 3, 5, 7', 9') reposent sur le même plan et ne sont pas parallèles entre eux mais ils ont un angle qui permet l'alignement des câbles (2) à la sortie de la gorge de poulie successive pour éviter des frottements et des usures ; où le système de transmission de puissance (P) est relié opérationnellement à un générateur (13) placé sur le sol et apte à générer de l'énergie provenant d'un générateur éolien (9) situé à un niveau supérieur et relié opérationnellement à un autre système de transmission de puissance (P) ; par ailleurs, les deux systèmes de transmission de puissance (P) sont reliés opérationnellement de manière réciproque à travers le même câble (2).

2. Système de transmission de puissance (P), selon la revendication 1, **caractérisé en ce que** les poulies (1, 5, 9') de diamètre plus grand sont solidaires entre elles, tandis que les poulies (3, 7') de diamètre plus petit sont à rotation libre.

3. Système de transmission de puissance (P) **caractérisé en ce qu'**il comprend au moins trois premières poulies ayant un premier diamètre, ayant un premier axe de rotation identique entre eux et aptes à coopérer opérationnellement avec au moins deux secondes poulies ayant un second diamètre et ayant un second axe de rotation identique entre eux et différent du premier axe de rotation ; le premier diamètre est plus petit que le second diamètre ; et un câble (2) apte à passer d'abord autour d'une circonférence d'une des premières poulies, puis autour d'une circonférence d'une des secondes poulies, ensuite autour d'une circonférence d'une autre des premières poulies, puis autour d'une circonférence d'une autre des secondes poulies, et enfin autour d'une circonférence d'une autre des premières poulies dans le but de suivre un parcours apte à fournir une surface de frottement étendue pour le câble (2) ; les axes des poulies reposent sur le même plan et ne sont pas parallèles entre eux mais ils ont un angle qui permet l'alignement des câbles (2) à la sortie de la gorge de poulie successive pour éviter des frottements et des usures ; où le système de transmission de puissance (P) est relié opérationnellement à un générateur (13) placé sur le sol et apte à générer de l'énergie provenant d'un générateur éolien (9) situé à un niveau supérieur et relié opérationnellement à un autre système de transmission de puissance (P) ; par ailleurs, les deux systèmes de transmission de puissance (P) sont reliés opérationnellement de manière réciproque à travers le même câble (2).

4. Système de transmission de puissance (P), selon la revendication 3, **caractérisé en ce que** les poulies de diamètre plus petit sont solidaires entre elles, tandis que les poulies de diamètre plus grand sont à rotation libre.

5. Système de transmission de puissance (P) **caractérisé en ce qu'**il comprend au moins trois premières poulies ayant un premier diamètre, ayant un premier axe de rotation identique entre eux et aptes à coopérer opérationnellement avec au moins deux secondes poulies, ayant un second diamètre et ayant un second axe de rotation identique entre eux et différent du premier axe de rotation ; le premier diamètre est égal au second diamètre ; et un câble (2) apte à passer d'abord autour d'une circonférence d'une des premières poulies, puis autour d'une circonférence d'une des secondes poulies, ensuite autour d'une circonférence d'une autre des premières poulies, puis autour d'une circonférence d'une autre des secondes poulies, et enfin autour d'une circonférence d'une autre des premières poulies dans le but de suivre un parcours apte à fournir une surface de frottement étendue pour le câble (2) ; les axes des poulies reposent sur le même plan et ne sont pas parallèles entre eux mais ils ont un angle qui permet l'alignement des câbles (2) à la sortie de la gorge de poulie successive pour éviter des frottements et des usures ; où le système de transmission de puissance (P) est relié opérationnellement à un générateur (13) placé sur le sol et apte à générer de l'énergie provenant d'un générateur éolien (9) situé à un niveau supérieur et relié opérationnellement à un autre système de transmission de puissance (P) ; par ailleurs, les deux systèmes de transmission de puissance (P) sont reliés opérationnellement de manière réciproque à travers le même câble (2).

6. Système de transmission de puissance (P), selon la revendication 5, **caractérisé en ce que** les poulies ayant le premier diamètre sont solidaires entre elles, tandis que les poulies ayant le second diamètre sont à rotation libre.

7. Système de transmission de puissance (P), selon l'une des revendications précédentes, **caractérisé en ce qu'**il est apte à être accouplé opérationnellement au moins à une première bobine (16, 18) en faisant passer le câble (2) qui sort d'une des secondes poulies (3, 7') à travers la première bobine (16, 18).

8. Système de transmission de puissance (P), selon la revendication 7, **caractérisé en ce qu'**il est apte à être accouplé opérationnellement au moins à une seconde bobine (16, 18) en faisant passer le câble (2) qui sort d'une des secondes poulies (3, 7') autour de la première bobine (16, 18) et en faisant passer le câble (2) qui sort d'une autre des secondes poulies (3, 7') autour de la seconde bobine (16, 18).

9. Dispositif de génération de puissance de type éolien comprenant :
- au moins un générateur éolien (9) placé à un niveau supérieur, doté de pales rotatives (8) relié opérationnellement à un système de transmission de puissance (P) selon l'une des revendications précédentes ;
- au moins un groupe de puissance (11) situé au sol et comprenant un générateur (13) et un système de transmission de puissance (P) selon l'une des revendications précédentes ; et
- un câble (2) apte à relier opérationnellement le générateur éolien (9) et le groupe de génération de puissance (11).

10. Dispositif de génération de puissance de type éolien, selon la revendication 9, **caractérisé en ce qu'**il comprend en outre un capteur (15) pour relever une tension sur le câble (2) et apte à régler l'absorption d'énergie de la part du générateur (13).
